# EUROPEAN PATENT APPLICATION

(11) **EP 1 830 316 A1**
(43) Date of publication of application: **05.09.2007**
(21) Application number: 06100091.5
(22) Date of filing: 04.01.2006
(51) Int. Cl.: G06Q 20/00

(54) **Data processing system, RFID reader and data processing method**

(71) Applicant: SAP AG, 69190 Walldorf (DE)
(72) Inventor: Bredehöft, Antje, 69254 Malsch (DE); Öttinger, Birgit, 69168 Wiesloch (DE); Oppert, Till, 67549 Worms (DE)
(74) Representative: Richardt, Markus Albert

(57) **Abstract**

The present invention relates to a data processing system comprising:
- a posting component (116) for receiving a posting request (114), the posting request containing a process code (108; 408) being indicative of one of a plurality of business processes and at least one object identifier (110) for identification of an object of the one business process,
- an accounting voucher generator component (122) for generating an electronic accounting voucher (144) for documentation of a posting (146) performed in response to the posting request, the accounting voucher generator component being adapted to select one of a plurality of posting schemes using the process code, each of the plurality of posting schemes having posting positions (153), each posting position having a predefined position type (154),
- a category identification component (126) for identification of a category of the posting using at least the object identifier,
- an account determination component (128) for determination of an account identifier using the category and the position type,
the posting component being adapted to generate an account determination request (147) containing the position type of the selected one of the posting schemes and the object identifier and the account determination component being adapted to return (150) the account identifier in response to the account determination request for entry of the account identifier into the accounting voucher.

## Description

### Field of the invention

The present invention relates to the field of data processing, and more particularly without limitation to enterprise resource planning systems and radio frequency identification (RFID).

### Background and prior art

The posting of posting items in an enterprise resource planning (ERP) system is usually documented by means of so-called accounting vouchers that are also referred to as book keeping vouchers or journal vouchers. The documentation of postings by means of accounting vouchers is regulated by law in several countries. For example, paragraph 257 of the German Commercial Code (HGB) requires such documentation. In general, the accounting documentation of the postings of a company needs to meet the applicable regulatory requirements. In particular, the documentation of the postings by means of accounting vouchers needs to be auditable.

In order to facilitate such documentation requirements a variety of accounting voucher forms, including electronic accounting voucher forms, is used in prior art ERP systems, such as SAP's R/3 system.

Electronic accounting voucher forms can have various formats that enable manual data entry, such as a mark-up language formats, extended mark-up language formats, spreadsheet or editable PDF formats. In prior art ERP systems some degree of manual interaction is required for completion of an accounting voucher form especially regarding the determination and entry of an account number for the respective posting.

### Summary of the invention

In accordance with the present invention there is provided a data processing system comprising a posting component for receiving a posting request, the posting request containing a process code being indicative of one of a plurality of business processes and at least one object identifier for identification of an object of the one business process, an accounting voucher generator component for generating an electronic accounting voucher for documentation of a posting performed in response to the posting request, the accounting voucher generator component being adapted to select one of a plurality of posting schemes using the process code, each of the plurality of posting schemes having posting positions, each posting position having a predefined position type, a category identification component for identification of a category of the posting using at least the object identifier, an account determination component for determination of an account identifier using the category and the position type, the posting component being adapted to generate an account determination request containing the position type of the selected one of the posting schemes and the object identifier and the account determination component being adapted to return the account identifier in response to the account determination request for entry of the account identifier into the accounting voucher.

The present invention is particularly advantageous as it facilitates the automated performance of postings and the automatic generation of the required documentation, i.e. accounting vouchers, without a need for manual user interaction. In particular, the present invention enables the automated determination of account identifiers, e.g. account numbers, for the postings and the respective accounting vouchers.

In accordance with an embodiment of the invention the posting component can receive the posting request from a client computer. The posting request can be entered automatically or manually into the client computer.

In accordance with an embodiment of the invention the posting component can receive the posting request from a radio frequency identification (RFID) reader. This is particularly advantageous as this avoids a need for the manual entry of the posting request. Rather the data that is required for generating the posting request is entered automatically using a RFID transponder and the posting request is then generated automatically by the RFID reader after having received certain information from the RFID transponder.

In accordance with an embodiment of the invention a user interface is provided that facilitates the entry of account determination logic parameters. Preferably the user interface includes a data entry table for tabular entry of the account identification parameters.

In another aspect the present invention relates to a data processing method comprising receiving a posting request, the posting request containing a process code being indicative of one of a plurality of business processes and at least one object identifier for identification of an object of the one business process, selecting one of a plurality of posting schemes using the process code, each of the plurality of posting schemes having posting positions, each posting position having a predefined position type, generating an electronic accounting voucher for documentation of the posting performed in response to the posting request by instantiation of the selected posting scheme, identification of a category using at least the object identifier, determining an account identifier using the category and the position type of the instantiated posting scheme, automatic entry of the account identifier into the accounting voucher.

In still another aspect the present invention relates to a computer program product having computer executable instructions for performing such a data processing method.

In still another aspect the present invention relates to a RFID reader for generating posting requests for processing of the data processing system of the invention. Preferably the RFID reader has a non-volatile memory for permanent storage of one of the process codes that corresponds to the physical location and use of the RFID reader in the respective business process. For example, the RFID reader is located in a goods receiving department. The RFID reader stores a corresponding process code, i.e. a process code identifying the process for receiving of goods.

### Brief description of the drawings

In the following embodiments of the invention are described in greater detail by way of example only making reference to the drawings in which:
- Figure 1: is a block diagram of a first embodiment of a data processing system of the invention,
- Figure 2: is a flowchart illustrating an embodiment of a method of the invention,
- Figure 3: schematically shows an electronic accounting voucher,
- Figure 4: is a block diagram of an embodiment of an RFID reader of the invention,
- Figure 5: illustrates a data entry window for entry of account determination logic parameters.

### Detailed description

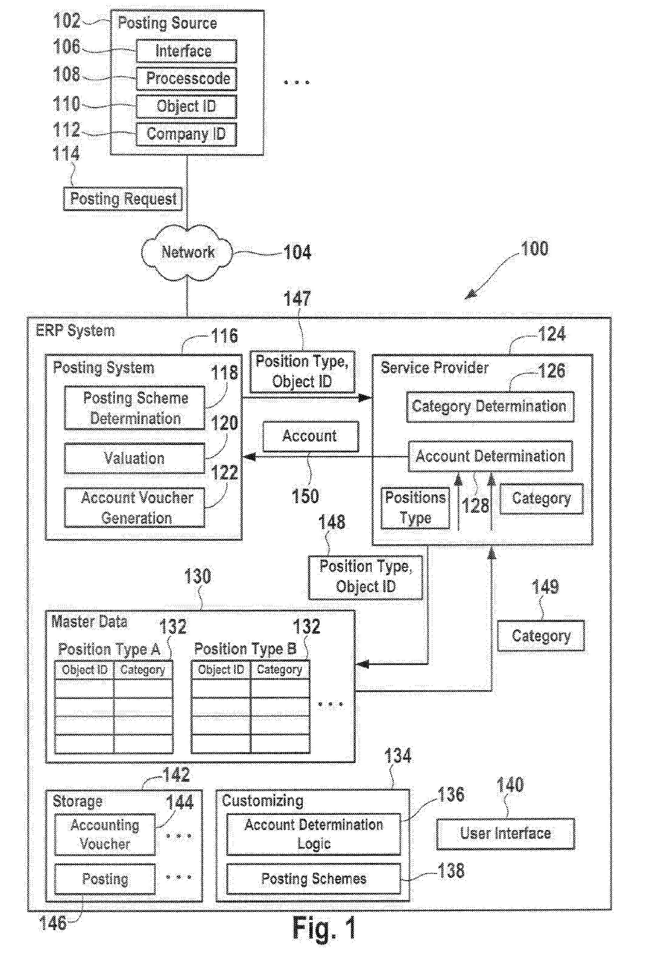

Fig. 1 shows a data processing system 100, such as an enterprise resource planning (ERP) system. The data processing system 100 is coupled to at least one posting source 102 by means of a network 104. The network 104 can be a company's intranet, an extranet or the Internet; the posting source 102 can also form an integral part of the ERP system.

The posting source 102 has an interface 106 for receiving posting data by manual input and/or automatically. The posting source 102 has one or more memory components for storing a process code 108, an object identifier (ID) 110, a company identifier (ID) 112, and/or other process data to be posted which will be referred to in the following as posting data. Depending on the implementation of the interface 106 the posting data is entered manually or at least partially by automated electronic communication. Some of the posting data can be predefined. Such predefined posting data is permanently stored in the posting source 102.

In response to entry of posting data via the interface 106 the posting source 102 generates a posting request 114 that is sent from the posting source 102 via the network 104 to the data processing system 100. The posting request 114 contains the posting data, e.g. the process code 108, the object ID 110 and the company ID 112.

The data processing system 100 has a posting system 116 for processing of the posting request 114 and other posting requests received from the posting source 102 or other posting sources coupled to the data processing system 100. The posting system 116 has a program component 118 for determination of a posting scheme to be used for performance of a posting request that has been received via the network 104, a program component 120 for valuation of a posting item contained in the posting schema and/or the posting request and a program component 122 for generating an electronic accounting voucher for documentation of the posting.

Further, the data processing system 100 has a component that implements a service provider 124 for automatic determination of account identifiers for the posting system 116. The service provider 124 has a program component 126 for determining a posting category and a program component 128 for determining an account identifier for the posting by means of the category and a position type. The posting category is also referred to as account determination Group. The posting categories are predefined and constitute abstractions of similar types of postings. The level of granularity of the category definitions can be adapted to the needs and internal procedures of the company that runs the data processing system 100. A posting category serves to categorize the object that are involved in a posting, e.g. domestic or foreign customers, machines or real estate.

Further, the data processing system 100 has master data 130. The master data 130 has a table 132 for each position type of the posting schemes that are defined in the data processing system 100. For example, the table 132 for the position type A assigns a category to each object of position type A. Likewise the table 132 for the position type B assigns a category to each object ID of that position type B, etc. However, it is to be noted that the categorization of master data does not need to depend on the position types. In this case "position type A" and "position type B" become "master data A" and "master data B", respectively.

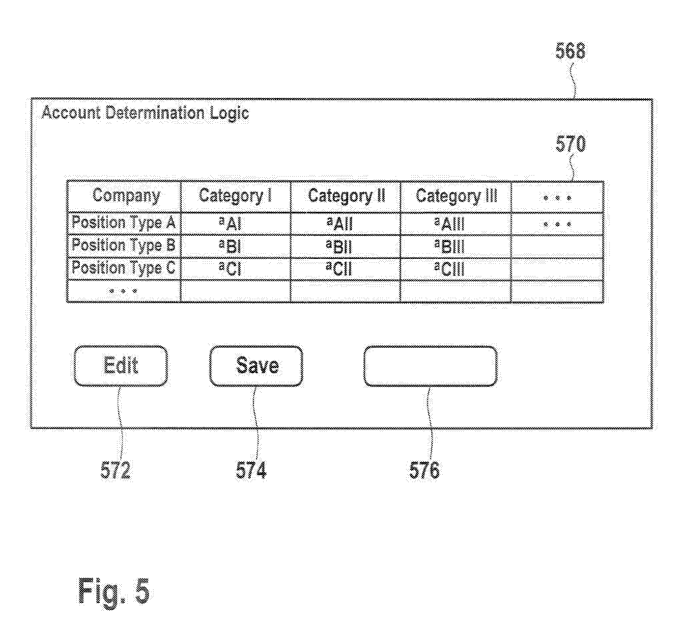

Further, the data processing system 100 has a customizing unit 134 for storage of customizing parameters that determine the account determination logic and for storage of the predefined posting schemes 138 of the data processing system 100. A user interface 140 serves for entry of the customizing data and in particular the customizing parameters 136 as it will be explained in more detail below with reference to Fig. 5.

The data processing system 100 has a storage 142 for storing an accounting voucher 144 and the respective posting 146.

In operation posting data is entered into the posting source 102 via the interface 106. In response the posting source 102 generates the posting request 114 that is sent to the data processing system 100 via the network 104. Receipt of the posting request 114 by the data processing system 100 invokes the program component 118.

The program component 118 selects one of the predefined posting schemes 138 for execution of the posting request 114. The selection of one of the posting schemes 138 can be performed based on the process code 108 that has been received with the posting request 114. For example, the process code 108 determines selection of one of the posting schemes 138 by the program component 118.

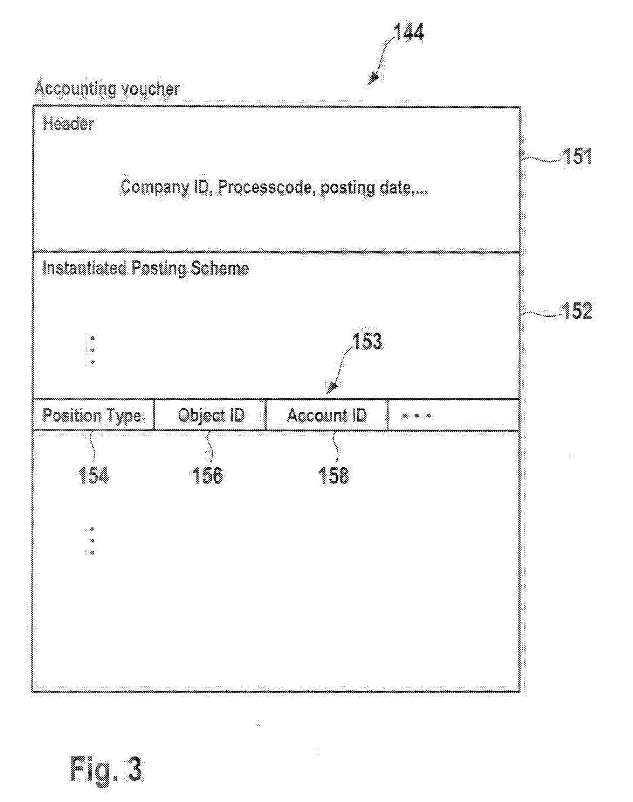

Further, the program component 120 is invoked in order to perform a valuation of the object identified by its object identifier 110 in the posting request 114, if necessary. The program component 122 generates the accounting voucher 144 by generating a header for the accounting voucher and by instantiation of the selected posting scheme. An exemplary structure of the accounting voucher 144 will be explained in greater detail below with reference to Fig. 3.

For determination of an account identifier required for execution of the posting request 114, the posting system 116 generates a request 147 that is sent from the posting system 116 to the service provider 124. The request 147 contains at least the position type of the instantiated posting scheme and the respective object ID of that position.

Receipt of the request 147 by the service provider 124 invokes the program component 126. The program component 126 generates a query 148 in order to query the master data 130 for determination of the category that is assigned to the tuple consisting of the position type and the object ID of the request 147. However, it is to be noted that the account determination group can be merely assigned to a single master data item rather than to a combination of position type and master data.

In the embodiment considered here the position type indicated in the query 148 serves for selection of one of the tables 132 whereas the object ID serves as a key for access to the assigned category within the selected table 132. Alternatively only the object ID is used as a key.

As a result of the query 148 a response 149 containing an indication of a category is returned to the service provider 124.

The service provider 124 enters the position type given in the request 147 and the category received with the response 149 into its program component 128 for determination of an account identifier. The program component 128 uses the customizing parameters 136 for determination of such an account identifier. The program component 128 generates a response 150 that contains that account identifier.

Upon receipt of the response 150 by the posting system 116 the account identifier is entered into the accounting voucher 144. Further, the result of the valuation performed by the program component 120, if any, is also entered into the accounting voucher 144. The value of the object may also be communicated to the data processing system 100 as part of the posting request 114. As a result of the execution of the posting request 114 a respective posting 146 and its accounting voucher 144 are stored in the storage 142.

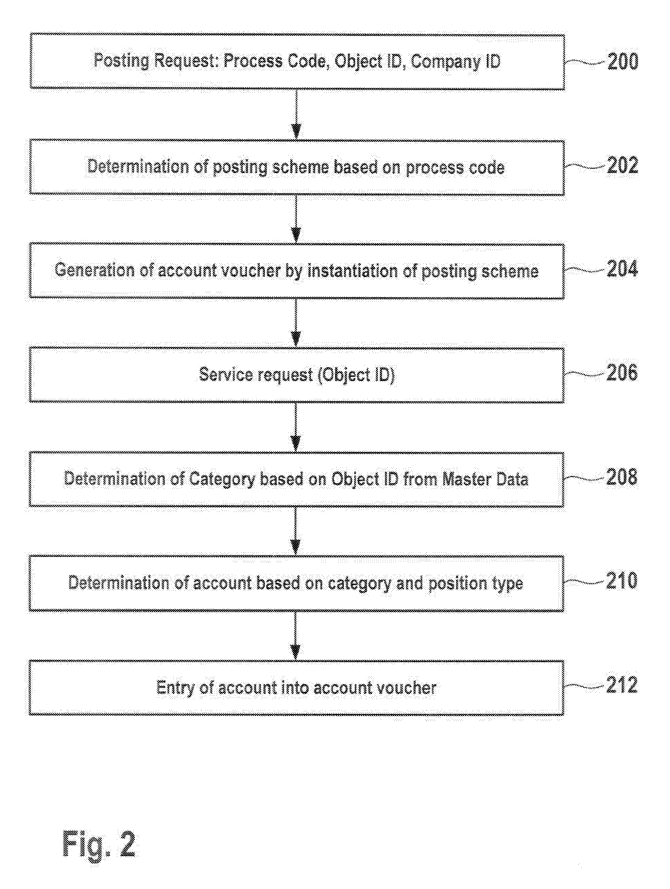

Fig. 2 shows a respective flowchart. In step 200 a posting request is received from a posting source. For example, the posting request carries a process code, an object ID and a company ID. The process code identifies one of the business processes that are defined for the company that is identified by the company ID. The object ID defines an object that is related to the performance of the business process. Depending on the kind of business process the object ID can identify a person, such as an employee, a customer, a business partner, an organizational entity, such as a client company or cooperation, or a physical object, such as a part, raw material, inventory item or the like.

The company ID is required to identify one of the companies of a corporation for which the data processing system is operated, such as an affiliated company, or a company in a corporate group or group of companies for which the positing request is to be executed. If the data processing system is operated for e.g. a small or mid-sized single company the company ID may be obsolete.

In step 202 a posting scheme is determined. For example, a posting scheme is selected from a set of predefined posting schemes using the process code as a selection criterion. In one implementation each of the predefined posting schemes has an assigned process code. Hence, the process code that is received with the posting request determines the posting scheme to be used for processing of the posting request.

In step 204 an electronic accounting voucher is generated for documentation of the requested posting. This can be done by generation of account voucher lines. The accounting voucher has a header for carrying header data, such as the posting date and the process code. The body of the accounting voucher is obtained by instantiation of the selected posting scheme.

For determination of an account identifier for a position of the instantiated posting scheme a service request is generated that carries at least the object identifier of that position (step 206). Preferably the service request does also carry an indication of the position type of the respective position. Position type can be defined as a compulsory data item and master data can be optional.

The service provider that receives the service request determines a posting category using the parameters received with the service request (step 208). For example, the category is obtained by querying the master data using the object identifier.

In step 210 an account identifier is determined using the category obtained in step 208 in response to the query and the position type information. For example, the category and position type information are evaluated by formulas or another evaluation logic in order to determine the account identifier belonging to that combination of category and position type.

In step 212 the account identifier is returned to the posting system for entry into the accounting voucher. The completed accounting voucher is then persistently stored for documentation purposes and the requested posting is executed using the account identifier.

Fig. 3 schematically shows the structure of an exemplary embodiment of the accounting voucher 144. The accounting voucher 144 has a header 151 carrying header data, such as the company ID, process code, the posting date, etc. The body 152 of the accounting voucher 144 is constituted by the selected instantiated posting scheme and contains posting lines. Fig. 3 illustrates one of the posting positions 152 contained in the instantiated posting scheme.

The posting position 153 comprises a field 154 for indicating the position type of the posting position 153, a field 156 for indicating the object ID to which the posting position 153 is related, a field 158 for indicating an account identifier of an account on which the posting has been booked. The posting position 153 typically comprises additional data such as the positing amount as provided by the valuation program component (e.g. program component 120 of Fig. 1) or with the posting request and/or other posting data.

Other posting positions that can be included in the body 152 are of the same or a similar structure.

When the accounting voucher 144 is initially generated such as by the program component 122 in the embodiment of Fig. 1, the account identifier is typically unknown to the posting system. The posting system therefore requests the account identifier from the respective service provider (cf. service provider 124 of Fig. 1). After receipt of the accounting identifier by the posting system from the service provider, the account identifier is entered into the field 158 for completion of the accounting voucher and execution of the requested posting operation.

This has the advantage that the posting source does not need to deliver an account identifier together with the posting request. Rather, the account identifier is obtained automatically by the posting system using the service provider.

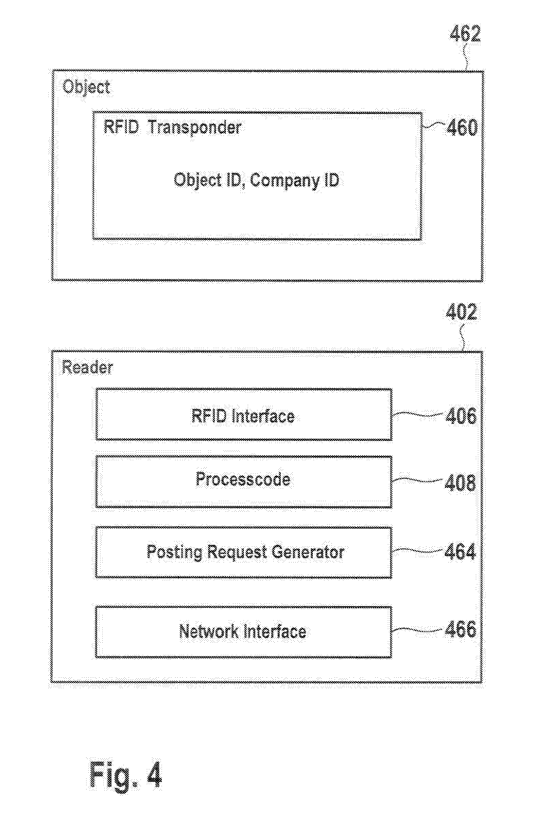

Fig. 4 illustrates an implementation of the posting source using RFID technology. Elements in the embodiment of Fig. 4 that correspond to elements of the embodiment of Fig. 1 are designated by like reference numerals.

In the embodiment considered here the posting source is constituted by an RFID reader 402. The RFID reader 402 has an RFID interface 406 for radio frequency communication with an RFID transponder 460 of an object 462. By means of the RFID interface 406 the RFID reader 402 can read data that is stored in the RFID transponder 460, such as the object ID of the object 462 and a company ID.

The RFID reader 402 has a non-volatile memory for storing the process code 408. For example, the RFID reader 402 is located at a delivery point where raw materials or parts, such as the object 462, are delivered. Hence the process code 408 identifies 'deliveries' as the respective business process as this is the only business process in which the RFID reader 402 is involved.

The RFID reader 402 has a posting request generator 464 for generating posting requests in response to data that has been read from the RFID transponder 406 and the network interface 466 for sending the posting request to an enterprise resource planning system, such as the data processing system 100 of Fig. 1.

Usage of RFID technology for implementation of the posting source has the advantage that no manual interaction is required for entering the posting data and initiating the posting request.

Fig. 5 illustrates an embodiment of the user interface 140 of Fig. 1 for entry of account determination logic parameters. The user interface generates a data entry window 568 that contains a data entry table 570. The data entry table 570 can be company specific such that a separate data entry table 570 can be provided for each of the companies of the corporation for which the data processing system 100 is operated.

The rules used for account determination, defining which characteristics can be used for determination of the correct account can be configured for each position type. Based on the these defined rules the tables on the user interface will look different.

In the exemplary embodiment considered here the 2-tuple consisting of the category and a position type determines an assigned account identifier. For assignment of the account identifiers the data entry table 570 has columns corresponding to the various categories, i.e. category I, II, III,... and rows corresponding to the various position types, i.e. position type A, B, C,...

For assignment of an account identifier through the combination of a category and a position type that account identifier is entered into the field of the data entry table 570 whose column is given by the category and whose row is given by the position type. For example, the account identifier a_{Al} is assigned to the 2-tuple consisting of position type A and category I, etc.

For example, the following posting categories and position types are used in the data entry table 570: category I = raw material; category II = merchandise; category III = finished product;... position type A = inventory; position type B = work in progress; position type C = ...

Other examples for posting categories (Account Determination Groups) are given in the following: Material Account Determination Group, which groups materials for the purpose of account determination. Possible values of the material account determination group are: raw material, merchandise material; Business Partner Account Determination Group, which groups business partner for the purpose of account determination. Possible values of the business partner account determination group are domestic business partner, foreign business partner.

Other examples include:
- Concessions, Licenses and similar Rights; Real Estate; Buildings; Technical Assets and Machinery; Other Machinery, Furniture and Office Equipment; AuC and Down Payments made as posting categories and Asset Portfolio as position types.
- Posting categories as above and position types revenue from post-capitalization; gain from asset sale; loss from asset sale; loss made on asset retirement w/o revenue scrapping as position types.
- Raw materials; supplies; semi finished products; finished products as posting categories and warehouse; work in process as posting types.

The data entry window 568 has a virtual control button 572 and a virtual control button 574. Further, the data entry window 568 has a data entry field 576 for entry of a company ID. The data entry table 570 is opened and rendered on the data entry window 568 in response to entry of the company ID in the data entry field 576. For editing the data entry table 570 a user clicks on the control button 572. This enables the user to enter or modify assignments of account identifiers to category / position type tuples. By clicking onto the control button 574 a user can save assignments of account identifiers to category / position type tuples.

It is to be noted that the data processing system 100 (cf. Fig. 1) can store charts of accounts that can be used for the determination of accounts for the performance of postings. For example, each company of a holding company that runs the data processing system 100 has at least one such chart of accounts. Usually each company has two charts of accounts: One for the consolidated financial statement of the holding and one for the purposes of company's financial statement.

The chart of accounts are customizable. However, it is preferred that the data processing system 100 is delivered with a default set of charts of accounts such that it can be used productively without delay.

### List of Reference Numerals

| | |
|---|---|
| 100 | Data processing system |
| 102 | Posting source |
| 104 | Network |
| 106 | Interface |
| 108 | Process code |
| 110 | Object identifier |
| 112 | Company identifier |
| 114 | Posting request |
| 116 | Posting system |
| 118 | Program component |
| 120 | Program component |
| 122 | Program component |
| 124 | Service provider |
| 126 | Program component |
| 128 | Program component |
| 130 | Master data |
| 132 | Table |
| 134 | Customizing unit |
| 136 | Customizing parameter |
| 138 | Posting schemes |
| 140 | User interface |
| 142 | Storage |
| 144 | Accounting voucher |
| 146 | Posting |
| 147 | Request |
| 148 | Query |
| 149 | Response |
| 150 | Response |
| 151 | Header |
| 152 | Body |
| 153 | Posting position |
| 154 | Field |
| 156 | Field |
| 158 | Field |
| 402 | RFID reader |
| 406 | RFID interface |
| 408 | Process code |
| 460 | RFID transponder |
| 462 | Object |
| 464 | Posting request generator |
| 466 | Network interface |
| 568 | Data entry window |
| 570 | Data entry table |
| 572 | Control button |
| 574 | Control button |
| 576 | Data entry field |

## Claims

1. A data processing system comprising:
- a posting component (116) for receiving a posting request (114), the posting request containing a process code (108; 408) being indicative of one of a plurality of business processes and at least one object identifier (110) for identification of an object of the one business process,
- an accounting voucher generator component (122) for generating an electronic accounting voucher (144) for documentation of a posting (146) performed in response to the posting request, the accounting voucher generator component being adapted to select one of a plurality of posting schemes using the process code, each of the plurality of posting schemes having posting positions (153), each posting position having a predefined position type (154),
- a category identification component (126) for identification of a category of the posting using at least the object identifier,
- an account determination component (128) for determination of an account identifier using the category and the position type,
the posting component being adapted to generate an account determination request (147) containing the position type of the selected one of the posting schemes and the object identifier and the account determination component being adapted to return (150) the account identifier in response to the account determination request for entry of the account identifier into the accounting voucher.

2. The data processing system of claim 1, the posting component being adapted to receive the posting request from a radio frequency identification (RFID) reader (402).

3. The data processing system of claim 2, the radio frequency identification (RFID) reader (402) being adapted to generate the posting request.

4. The data processing system of claim 3, the radio frequency identification reader having permanently stored therein the process code.

5. The data processing system of any one of the preceding claims, the category identification component using the position type for identification of the category.

6. The data processing system of any one of the preceding claims, the category of an object being stored as master data (130).

7. The data processing system of any one of the preceding claims, further comprising a user interface (140) for entry of account determination logic parameters.

8. The data processing system of claim 7, the user interface being adapted to display a table (570) for a user's entry of account identifiers on table coordinates, wherein a first table coordinate is given by a position type and a second table coordinate is given by a category.

9. A data processing method comprising:
- receiving a posting request, the posting request containing a process code being indicative of one of a plurality of business processes and at least one object identifier for identification of an object of the one business process,
- selecting one of a plurality of posting schemes using the process code, each of the plurality of posting schemes having posting positions, each posting position having a predefined position type,
- generating an electronic accounting voucher for documentation of the posting performed in response to the posting request by instantiation of the selected posting scheme,
- identification of a category using at least the object identifier,
- determining an account identifier using the category and the position type of the instantiated posting scheme,
- automatic entry of the account identifier into the accounting voucher.

10. The data processing system method of claim 9, wherein the posting request is received from a client computer.

11. The data processing method of claim 9, wherein the posting request is received from a radio frequency identification (RFID) reader.

12. The data processing method of claims 9, 10 or 11, wherein the category is identified using the position type.

13. The data processing method of any one of the preceding claims 9 to 12, further comprising entry of account determination logic parameters via a user interface.

14. The data processing method of claim 13, the account determination logic parameters comprising position type and category tuples, each tuple having an assigned account identifier.

15. The data processing method of claim 14, the assignment of account identifiers to tuples being performed by entry into a table.

16. A computer program product comprising computer executable instructions for performing a method of any one of the preceding claims 9 to 15.

17. A radio frequency identification (RFID) reader comprising:
- means (406) for receiving at least an object identifier (110) from an RFID transponder,
- means (408) for storing a process code, the process code being indicative of a predefined business process,
- means (464) for generating a posting request (114), the posting request comprising at least the process code and the object identifier,
- an interface (466) for sending the posting request to a data processing system (100).
